# EUROPÄISCHE PATENTSCHRIFT

(11) **EP 0 818 294 B1**
(45) Veröffentlichungstag und Bekanntmachung des Hinweises auf die Patenterteilung: **14.05.2003**
(21) Anmeldenummer: 97111713.0
(22) Anmeldetag: 10.07.1997
(51) Int. Cl.: B29C 45/16, F16C 13/00

(54) **Achse oder Rollkörper**
axis or roller body
Arbre ou rouleau

(30) Priorität: 10.07.1996 CH 172096
(43) Veröffentlichungstag der Anmeldung: 14.01.1998
(73) Patentinhaber: Sarnatech BNL Limited, North Yorkshire HG5 8LF (GB)
(72) Erfinder: Lerch, Stephan, 4665 Oftringen (CH); Rutishauser, Thomas, 8713 Uerikon (CH)
(74) Vertreter: Zink-Wild, Markus Peter

(56) Entgegenhaltungen:
- EP-A- 0 492 477
- GB-A- 1 301 652
- GB-A- 1 386 593
- PATENT ABSTRACTS OF JAPAN vol. 15, no. 146 (M-1102), 12.April 1991 & JP 03 024926 A (VICTOR CO OF JAPAN LTD), 1.Februar 1991,
- PATENT ABSTRACTS OF JAPAN vol. 10, no. 51 (M-457) [2108] , 28.Februar 1986 & JP 60 199622 A (INOUE EMU TEE PII KK), 9.Oktober 1985,

## Beschreibung

Die vorliegende Erfindung betrifft eine Achse oder einen Rollkörper auf der Basis wenigstens eines ersten im Spritzgussverfahren verarbeitbaren thermoplastischen Materials.

Diese Erfindung betrifft auch ein Verfahren zur Herstellung dieser Achse oder dieses Rollkörpers sowie die Verwendung dieser Achse oder dieses Rollkörpers.

Bei herkömmlichen Rollen ist die Achse aus einem Metall oder aus Legierungen hergestellt.

In einem separaten Arbeitsgang wird diese Achse manuell oder maschinell mit einer oder mehrerer Gummiwalze(n) oder einer oder mehrerer Walze(n) aus thermoplastischem Material verbunden.

Dieser Verbund kann eine Verklebung, ein Aufpressen, eine Einrasterung, etc. sein.

Diese Gummiwalzen können aber auch direkt auf diese Achse aufvulkanisiert werden.

Bevor solche Rollen in modernen elektronischen Geräten, wie Drucker, Etikettiermaschinen, Fotokopierer, Faxgeräte, etc., verwendet werden können, ist noch eine aufwendige Oberflächenbehandlung, wie Schleifen, Aufrauhen, etc., der Walze(n) notwendig.

Solche Rollen sind wegen der verschiedenen Materialien, deren Verarbeitung und Nachbehandlung entsprechend teuer.

Um an der Metallachse die gewünschten Geometrien, wie beispielsweise Wellendurchmesser, Einstiche, Antriebselemente, etc., zu erhalten, sind aufwendige Nachbearbeitungen notwendig.

Das naturbedingte hohe Gewicht sowie das mögliche elektrostatische Aufladen der Metallachse kann sich nachteilig auswirken.

Zur Minimalisierung der Nachteile und Einschränkungen bei der Wahl der Geometrien bei der Metallachse wurden Achsen auf der Basis von Kunststoffen entwickelt.

Solche herkömmliche Kunststoffachsen weisen jedoch immer noch die Nachteile der separaten Montage der Walzen aus Gummi oder aus thermoplastischem Material auf, verbunden mit der oben genannten aufwendigen Oberflächenbehandlung.

In JP-A-03-24926 wird ein Verfahren zur Herstellung von Führungsrollen für die Verwendung in Videokassettengeräten (video tape recorder, VTR) und in Kassettenbändern für VTR beschrieben.

Bis zum Zeitpunkt dieser japanischen Erfindung wurden solche Führungsrollen nur aus einem einzigen Material gefertigt.

Dies hatte folgende Nachteile:

An den Aussenstellen solcher Führungsrollen traten Einfallstellen auf, welche eine maschinelle Nachbearbeitung notwendig machten.

Ausserdem musste jeweils bei der Materialwahl ein Kompromiss zwischen Gleitfähigkeit und Abriebfestigkeit eingegangen werden.

Gemäss JP-A-03-24926 werden diese Nachteile durch die Anwendung von 2 verschiedenen Materialien eliminiert.

Gemäss diesem Verfahren wird in einer ersten Station einer Zwei-Farben-Spritzmaschine ein Innenteil einer solchen Führungsrolle hergestellt.

Das Material für dieses Innenteil hat selbstschmierende Eigenschaften.

In der zweiten Station der genannten Maschine wird wenigstens die gesamte äussere zylindrische Oberfläche des genannten Innenteils mit einem solchen zweiten Material beschichtet, welches abriebfest ist und die äussere Oberfläche der Führungsrolle ergibt.

Dieses Verfahren eignet sich nur für die Herstellung von kleinen (0,5 mm bis 3 mm lang) Teilen mit. einfacher, zylindrischer Geometrie.

An den Berührungsstellen dieser beiden Materialien können Schwierigkeiten betreffend Materialverbindung auftreten.

In JP-A-60-199 622 wird ein Verfahren zur Herstellung von Walzenrollen auf der Basis von Kunstharzen beschrieben.

Dieses Verfahren beinhaltet die folgenden Schritte:
(a) ein erstes kristallines Harz wird um ein Einlageteil in der Form einer Metallachse gespritzt;
(b) ein zweites kristallines Harz wird um den aus dem Schritt (a) erhaltenen Einlageteil gespritzt.

Das so erhaltene Produkt muss an seiner äussersten Oberfläche und an seinen Enden geschnitten und poliert werden.

Dieses Verfahren ist entwickelt worden, um Lufteinschlüsse und Einfallstellen bei Walzenrollen mit grösseren Durchmessern (etwa 30 mm) zu vermeiden.

In EP 0 492 477 A2 werden Teile für die Verwendung in elektrostatographischen Reproduktionsapparaten beschrieben.

Das in den Figuren 6 bis 8 dargestellte Teil hat folgenden Aufbau:

Ein hohler, rohrförmiger Teil 30 aus den Materialien Aluminium, Kupfer, rostfreiem Stahl oder anderen Stahllegierungen ist ausgefüllt und teilweise umgeben mit einem härtbaren und fliessbaren Material.

Das Teil 30 hat Schlitze 31, durch welche dieses härtbare und fliessbare Material austreten kann.

Durch diesen Austritt wird die Kavität im entsprechenden Spritzgusswerkzeug gefüllt, resultierend in der gewünschten Funktionsform der nun gefüllten Rolle 69.

Auf diese Rolle 69 kann in einer zweiten Formgebungsoperation eine Beschichtung 68, wie etwa ein geformtes Elastomer, aufgetragen werden.

Gemäss GB 1 386 593 wird in einem ersten Schritt in einem ersten herkömmlichen Spritzgusswerkzeug Polycarbonat für ein Rotationselement, wie etwa eine Rolle oder ein Rad, hergestellt.

Das so erhaltene Rotationselement wird anschliessend in ein zweites Spritzgusswerkzeug eingelegt und mit einem Reifen aus Polyurethan umgeben.

Gemäss GB 1 301 652 wird in einem ersten Schritt in einem ersten herkömmlichen Spritzgusswerkzeug ein Grundkörper mit spezieller Formgebung hergestellt.

Dieser Grundkörper kann aus Kunststoff, wie etwa Polypropylen, sein.

Dieser so erhaltene Grundkörper, welcher auch aus Metall hergestellt sein kann, wird anschliessend in ein zweites Spritzgusswerkzeug eingelegt und mit einem Reifen aus Kunststoff, wie etwa plastifiziertes Polyvinylchlorid, umgeben.

Dank des speziell geformten Grundkörpers wird eine gute und sichere Positionierung des Reifens erzielt.

Es ist ein Ziel der vorliegenden Erfindung, die oben genannten Nachteile zu überwinden.

Es ist ein weiteres Ziel der vorliegenden Erfindung, eine Achse oder einen Rollkörper zur Verfügung zu stellen, welche(r) mit einem einfachen und wirtschaftlichen Verfahren hergestellt werden kann.

Diese Achse oder dieser Rollkörper soll ausschliesslich aus thermoplastischen, im Spritzgussverfahren verarbeitbaren Materialien gefertigt sein.

Der Verbund zwischen den jeweils verwendeten thermoplastischen Materialien soll dauerhaft sein.

Dieser Verbund soll ohne die Zuhilfenahme von weiteren zusätzlichen Materialien, wie Klebstoffe, Befestigungselemente, Montagehilfen, etc., und ohne äussere Einwirkungen, wie Druck, Ultraschall, etc., zustande kommen.

Die jeweils verwendeten thermoplastischen Materialien sollen aufeinander gegenseitig abstimmbar und den Anforderungen an den jeweiligen Verwendungszweck anpassbar sein.

Die jeweils eingesetzten Materialien sollen insbesondere auf die jeweils geforderten Festigkeits-, Dimensionsstabilitäts-, Abrieb-, Haftungs-, Härte- und Reibungs-Eigenschaften abgestimmt sein, um einen optimalen wirtschaftlichen Nutzen zu erbringen.

Die jeweils gewünschten Geometrien dieser Achse oder dieses Rollkörpers sollen einfach und in Serieproduktion realisierbar und reproduzierbar sein.

Die verschiedenen Elemente dieser Achse oder dieses Rollkörpers, wie
- die Elemente, welche die Funktion einer Rolle haben, und
- die Elemente, welche die Funktion der Lagerung haben, sowie gegebenenfalls
- die Antriebselemente,
- die Stabilisierungselemente,
- die Funktions- und/oder Konstruktionselemente, und
- die Elemente, welche zur Verbesserung und Vereinfachung des Abquetschens während des Spritzvorganges beitragen,
sollen optimal aufeinander abstimmbar und kombinierbar sein, um für die jeweiligen Anforderungen die bestmöglichen Lösungen zu ermöglichen.

Diese Achse oder dieser Rollkörper soll die jeweiligen Anforderungen bezüglich Geradheit, Rundheit, Zylindrizität, Koaxialität und Rundlauf erfüllen.

Die oben genannten Ziele werden mit der erfindungsgemässen Achse oder dem erfindungsgemässen Rollkörper gemäß Anspruch 1 erreicht.

Die erfindungsgemässe Achse oder der erfindungsgemässe Rollkörper auf der Basis wenigstens eines ersten im Spritzgussverfahren verarbeitbaren thermoplastischen Materials, welches die jeweils geforderten Eigenschaften aufweist, welche(r)
- wenigstens ein erstes Element 1, welches die Funktion einer Rolle hat, und
- wenigstens ein zweites Element 2, welches die Funktion der Lagerung hat,
sowie gegebenenfalls
- wenigstens ein Antriebselement 3,
- wenigstens ein Stabilisierungselement 4,
- wenigstens ein Funktions- und/oder Konstruktionselement 5, wie Nocken, Keilbahnen, Nuten, Hebel, Zapfen, Bolzen, Bohrungen, Mitnehmer, und
- wenigstens ein drittes Element 6, welches zur Verbesserung und Vereinfachung des Abquetschens während des Spritzvorganges beiträgt,
umfasst,
ist dadurch gekennzeichnet, dass
das erste Element 1, das zweite Element 2 sowie die gegebenenfalls vorhandenen Elemente 3, 4, 5, 6 einen Grundkörper auf der Basis wenigstens eines ersten im Spritzgussverfahren verarbeitbaren thermoplastischen Materials, welches die jeweils geforderten Eigenschaften aufweist, bilden,
wobei die Achse oder der Rollkörper ausschliesslich aus thermoplastischen, im Spritzgussverfahren verarbeitbaren Materialien hergestellt ist, und
wobei das erste Element 1 und das zweite Element 2 separate Funktionsbereiche entlang des Grundkörpers sind,
die jeweils gewünschte Anzahl von genannten ersten Elementen 1 mit wenigstens einem zweiten im Spritzgussverfahren verarbeitbaren thermoplastischen Material, welches die jeweils geforderten Eigenschaften aufweist, vollständig oder teilweise umgeben ist, und
dass die betreffenden thermoplastischen Materialien miteinander einen adhäsiven oder kohäsiven oder mechanischen im Spritzgussverfahren erhaltenen Verbund bilden, und wobei dieser Verbund ohne die Zuhilfenahme von weiteren zusätzlichen Materialien oder äusseren Einwirkungen zustande gekommen ist.

Das erfindungsgemässe Verfahren gemäß Anspruch 14 zur Herstellung der erfindungsgemässen Achse oder des erfindungsgemässen Rollkörpers ist dadurch gekennzeichnet, dass man
- in einem ersten Schritt in einem Spritzgusswerkzeug mittels Spritzgussverfahren den Grundkörper mit der gewünschten Anzahl, Form und Dimensionen der Elemente 1, 2, 3, 4, 5, 6, 7 auf der Basis des ersten thermoplastischen Materials herstellt, und
- in einem zweiten Schritt in einem Spritzgusswerkzeug mittels Spritzgussverfahren die jeweils gewünschte Anzahl von ersten Elementen 1 auf dem so erhaltenen Grundkörper vollständig oder teilweise mit einem zweiten thermoplastischen Material umgibt, wobei zwischen den beiden genannten thermoplastischen Materialien ein adhäsiver oder kohäsiver oder mechanischer Verbund gebildet wird, und wobei dieser Verbund ohne die Zuhilfenahme von weiteren zusätzlichen Materialien oder äusseren Einwirkungen gebildet wird.

Bevorzugte Ausführungsformen dieser Erfindungsgegenstände sind in den abhängigen Ansprüchen definiert.

Die erfindungsgemässe Achse oder der erfindungsgemässe Rollkörper kann
- zum Fördern und/oder Transportieren von Aufzeichnungsträgern in der Form eines Einzelblattes, eines Streifens oder einer Endlosrolle, beispielsweise Bild- und/oder Schriftträger, insbesondere auf der Basis von Kunststoffen, Metallen, Metall-Legierungen, Papieren, Karton, wie Banknoten, beschriftete oder bedruckte Papiere; und
- zum Fördern und/oder Transportieren von Gegenständen, wie Holz-, Kunststoff- oder Steinplatten, Behälter, wie Flaschen, Gläser, Kunststoffboxen, Geräten
verwendet werden.

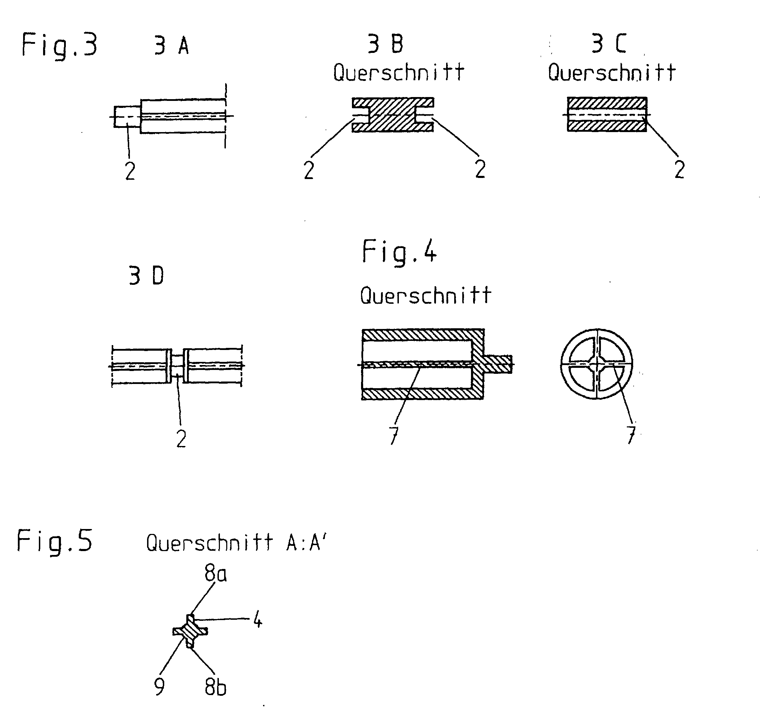

Im folgenden Teil werden unter Bezugnahme auf die Figuren 1 bis 5 mögliche Ausführungsformen der vorliegenden Erfindung beschrieben.

Dabei werden Ausführungsformen, wie sie in den abhängigen Ansprüchen definiert sind, normalerweise nicht wiederholt.
Figur 1 zeigt einen schematischen Längsschnitt einer erfindungsgemässen Achse für die Verwendung in einem Blattzuführsystem.
Figuren 2a bis 2f zeigen mögliche Formen des ersten Elementes 1, welches die Funktion einer Rolle hat.
Figuren 3a bis 3d zeigen mögliche Formen des zweiten Elementes 2, welches die Funktion der Lagerung hat.
Figur 4 zeigt einen Querschnitt durch ein rohrförmig aufgebautes erstes Element 1, in dem Verstärkungsrippen 7 vorhanden sind.
Figur 5 zeigt einen möglichen Querschnitt entlang der Achse A-A' durch eine erfindungsgemässe Achse.

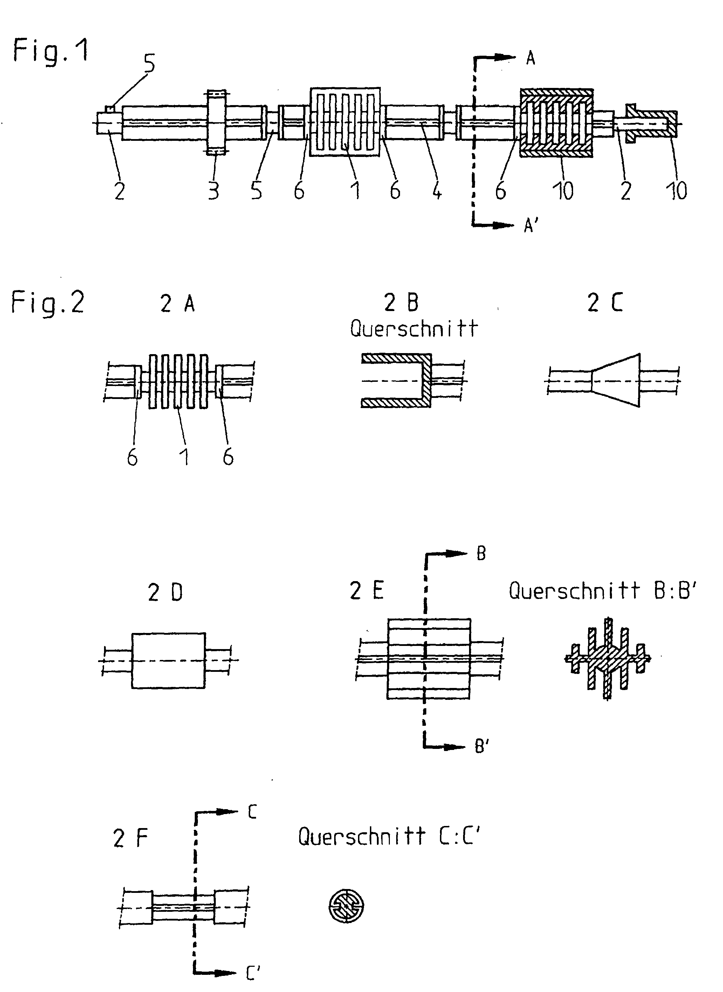

Die in Figur 1 dargestellte Achse hat eine Länge von etwa 260 mm bis etwa 300 mm.

Das Mass von der einen äusseren Oberfläche 8a des Stabilisierungselementes 4 zur gegenüberliegenden Oberfläche 8b des Stabilisierungselementes 4 beträgt von 6 mm bis 15 mm, insbesondere von 5 mm bis 12 mm.

Die einzelnen Stabilisierungselemente 4 stehen zweckmässig zwecks Torsionsfestigkeit sowie Biegfestigkeit mit einer Querschnittsvergrösserung 9 miteinander in Verbindung.

Von zwei bis acht, vorzugsweise vier, Stabilisierungselemente 4 sind speziell geeignet.

Das Funktions- und/oder Konstruktionselement 5 kann ebenfalls der Lagerung dienen.

Das Antriebselement 3 ist als Zahnrad, beispielsweise mit 15 bis 60 Zähnen, ausgebildet.

Die beiden zweiten Elemente 2 sind je als Welle mit einem Durchmesser von 4 mm bis 8 mm ausgebildet.

Beide erste Elemente 1 sind lamellenförmig aufgebaut.

Der äussere Durchmesser dieser Lamellen beträgt von 8 mm bis 30 mm, insbesondere von 10 mm bis 20 mm.

Der innere Durchmesser dieser Lamellen beträgt von 3 mm bis 6 mm.

Die Wandstärke der einzelnen Lamellen beträgt von 0,8 mm bis 3 mm.

Die Anzahl der vorhandenen ersten Elemente 1 richtet sich im allgemeinen nach dem jeweiligen Verwendungszweck der erfindungsgemässen Achse oder des erfindungsgemässen Rollkörpers.

So können von 1 bis 30 solcher erster Elemente 1 vorhanden sein. Die Dimensionierung dieser ersten Elemente 1 richtet sich auch nach dem jeweiligen Verwendungszweck der erfindungsgemässen Achse oder des erfindungsgemässen Rollkörpers und nach der jeweils vorhandenen Anzahl von ersten Elementen 1.

Die in Figur 1 dargestellten ersten Elemente 1 können eine Länge von 4 mm bis 250 mm, insbesondere 10 mm bis 50 mm, haben.

Die drei vorhandenen dritten Elemente 6 tragen zur Verbesserung und Vereinfachung des Abquetschens während der nachfolgenden Spritzvorgänge bei.

Die bis jetzt beschriebenen Teile bilden den Grundkörper, welcher im erfindungsgemässen Verfahren im ersten Schritt auf der Basis eines ersten thermoplastischen Materials hergestellt wird, beispielsweise ein Polyarylamid, wie etwa ein Produkt IXEF der Firma Solvay S.A..

In einem zweiten Schritt wird die jeweils gewünschte Anzahl von ersten Elementen 1 dieses Grundkörpers vollständig oder teilweise mit einem zweiten thermoplastischen Material umgeben, beispielsweise ein Styrol-Block-Copolymer, SEBS, wie etwa Thermoflex der Firma PTS.

In einem dritten Schritt kann die jeweils gewünschte Anzahl der im zweiten Schritt vollständig oder teilweise mit dem zweiten thermoplastischen Material umgebenen ersten Element 1 und/oder die jeweils gewünschte Anzahl von ersten Elementen 1, die im zweiten Schritt nicht vom zweiten thermoplastischen Material umgeben worden sind, und/oder die jeweils gewünschte Anzahl von zweiten Elementen 2 mit einem dritten thermoplastischen Material 10 vollständig oder teilweise umgeben werden.

Zwischen den jeweiligen thermoplastischen Materialien wird ein adhäsiver oder kohäsiver oder mechanischer Verbund gebildet.

Dieser Verbund wird ohne die Zuhilfenahme von weiteren zusätzlichen Materialien oder äusseren Einwirkungen gebildet.

Die oben genannten Schritte werden vorzugsweise in einem Mehrkomponenten-Spritzgusswerkzeug im Mehrkomponenten-Spritzgussverfahren ausgeführt.

Die mit dem zweiten oder dritten thermoplastischen Material umgebenen, lamellenförmig ausgebildeten ersten Elemente 1 haben einen Aussendurchmesser von 10 mm bis 35 mm, insbesondere 12 mm bis 25 mm.

Es ist bevorzugt, dass das dritte thermoplastische Material an diesen Stellen in einer Materialstärke von etwa 0,8 mm bis etwa 3 mm aufgespritzt wird.

Die zweiten Elemente 2 werden hauptsächlich deshalb mit dem dritten thermoplastischen Material 10, insbesondere mit einer Materialstärke von etwa 1 mm bis 2,5 mm, umgeben, um eine bessere Lagerung zu erzielen, und um eine wirtschaftlichere Montage der Lagerbüchsen zu erreichen.

Eine Oberflächenbehandlung gemäss der weiter oben genannten aufwendigen Art erübrigt sich in den meisten Fällen.

In der vorliegenden Erfindung werden die folgenden Bezugszeichen verwendet.
1 erstes Element, welches die Funktion einer Rolle hat
2 zweites Element, welches die Funktion der Lagerung hat
3 Antriebselement
4 Stabilisierungselement
5 Funktions- und/oder Konstruktionselement
6 drittes Element, welches zur Verbesserung und Vereinfachung des Abquetschens während der nachfolgenden Spritzvorgänge beiträgt
7 Verstärkungsrippen
8a, 8b Oberflächen des Stabilisierungselementes 4
9 Querschnittsvergrösserung
10 drittes thermoplastisches Material.

## Patentansprüche

1. Achse oder Rollkörper auf der Basis wenigstens eines ersten im Spritzgussverfahren verarbeitbaren thermoplastischen Materials, welche(r)
- wenigstens ein erstes Element (1), welches die Funktion einer Rolle hat, und
- wenigstens ein zweites Element (2), welches die Funktion der Lagerung hat,
sowie gegebenenfalls
- wenigstens ein Antriebselement (3),
- wenigstens ein Stabilisierungselement (4),
- wenigstens ein Funktions- und/oder Konstruktionselement (5), wie Nocken, Keilbahnen, Nuten, Hebel, Zapfen, Bolzen, Bohrungen, Mitnehmer, und
- wenigstens ein drittes Element (6), welches zur Verbesserung und Vereinfachung des Abquetschens während des Spritzvorganges beiträgt,
umfasst,
**dadurch gekennzeichnet, dass**
das erste Element (1), das zweite Element (2) sowie die gegebenenfalls vorhandenen Elemente (3, 4, 5, 6) einen Grundkörper auf der Basis wenigstens eines ersten im Spritzgussverfahren verarbeitbaren thermoplastischen Materials bilden,
wobei die Achse oder der Rollkörper ausschliesslich aus thermoplastischen, im Spritzgussverfahren verarbeitbaren Materialien hergestellt ist, und
wobei das erste Element (1) und das zweite Element (2) separate Funktionsbereiche entlang des Grundkörpers sind,
die jeweils gewünschte Anzahl von genannten ersten Elementen (1) mit wenigstens einem zweiten im Spritzgussverfahren verarbeitbaren thermoplastischen Material vollständig oder teilweise umgeben ist, und
dass die betreffenden thermoplastischen Materialien miteinander einen adhäsiven oder kohäsiven oder mechanischen im Spritzgussverfahren erhaltenen Verbund bilden, und wobei dieser Verbund ohne die Zuhilfenahme von weiteren zusätzlichen Materialien oder äusseren Einwirkungen zustande gekommen ist.

2. Achse oder Rollkörper nach Anspruch 1, **dadurch gekennzeichnet, dass** die jeweils gewünschte Anzahl von ersten Elementen (1), welche nicht vom genannten zweiten thermoplastischen Material umgeben sind, und/oder die jeweils gewünschte Anzahl von äusseren Oberflächen der mit dem zweiten thermoplastischen Material umgebenen ersten Elementen (1) und/oder die jeweils gewünschte Anzahl von zweiten Elementen (2) mit einem dritten thermoplastischen Material vollständig oder teilweise umgeben ist, (sind).

3. Achse oder Rollkörper nach einem der Ansprüche 1 bis 2, **dadurch gekennzeichnet, dass** die thermoplastischen Materialien die jeweils geforderten und aufeinander abgestimmten Festigkeits-, Dimensionsstabilitäts-, Abrieb-, Haftungs-, Härte- und Reibungs-Eigenschaften aufweisen.

4. Achse oder Rollkörper nach einem der Ansprüche 1 bis 3, **dadurch gekennzeichnet, dass** das erste thermoplastische Material ausgewählt ist aus der Gruppe, bestehend aus
- technischen Polymeren, beispielsweise Polyamide, PA, Polycarbonate, PC, Polybutylenterephthalate, PBTP, Polyethylenterephthalate, PETP, Polyoxymethylen, POM,
- Hochleistungspolymeren, beispielsweise Flüssigkristall-Polymere, LCP, Polyetherimid, PEI, Polyethersulfon, PES, Polyphenylensulfid, PPS,
wobei diese Materialien gegebenenfalls mit Zusätzen, beispielsweise Glasfasern, Kohlenfasern, Mitteln zur Beeinflussung der Gleiteigenschaften und/oder des Brandverhaltens, Farbstoffen, Mineralstoffen, modifiziert sind.

5. Achse oder Rollkörper nach einem der Ansprüche 2 bis 4, **dadurch gekennzeichnet, dass** das zweite und das dritte thermoplastische Material je ausgewählt ist aus der Gruppe, bestehend aus
- thermoplastischen Elastomeren auf der Basis von Copolyestern, Polyether-Block-Amiden, thermoplastischen Polyurethanen, TPU, thermoplastischen Polyolefinen, TPO, und Styrol-Block-Copolymeren, SEBS,
- technischen Polymeren, beispielsweise Polyoxymethylen, POM, Polyamid, PA, Polybutylenterephthalat, PBTP, und
- Standardpolymeren, beispielsweise Polypropylen, PP, Polyethylen, PE, Ethylen-Vinylacetat-Copolymeren, EVA,
wobei diese Materialien gegebenenfalls mit Zusätzen, beispielsweise Mitteln zur Beeinflussung der Gleiteigenschaften und/oder des Brandverhaltens, Farbstoffen, Mineralstoffen, modifiziert sind.

6. Achse oder Rollkörper nach einem der Ansprüche 2 bis 5, **dadurch gekennzeichnet, dass** im Falle eines adhäsiven oder kohäsiven Verbundes zwischen erstem und zweitem oder zwischen zweitem und drittem oder zwischen erstem und drittem thermoplastischen Material die Eigenschaften der jeweiligen Materialien aufeinander abgestimmt sind, insbesondere die Schmelzpunkte und die Zugehörigkeit in eine bestimmte Stoffklasse sowie die verfahrenstechnischen Parameter.

7. Achse oder Rollkörper nach einem der Ansprüche 1 bis 6, **dadurch gekennzeichnet, dass** das erste thermoplastische Material ein Polyarylamid ist, und dass das zweite thermoplastische Material ein Styrol-Block-Copolymer ist.

8. Achse oder Rollkörper nach einem der Ansprüche 1 bis 7, **dadurch gekennzeichnet, dass** von 1 bis 30, insbesondere von 1 bis 15, vorzugsweise 1 bis 8, erste Elemente (1) vorhanden sind.

9. Achse oder Rollkörper nach einem der Ansprüche 1 bis 8, **dadurch gekennzeichnet, dass** das erste Element (1) einen zylindrischen, konischen, lamellenförmigen oder einen offenen oder einseitig geschlossenen rohrförmigen Aufbau hat.

10. Achse oder Rollkörper nach einem der Ansprüche 1 bis 9, **dadurch gekennzeichnet, dass** das erste Element (1) Verstärkungsrippen (7) aufweist, insbesondere von 2 bis 20 symmetrisch angeordnete Verstärkungsrippen (7).

11. Achse oder Rollkörper nach einem der Ansprüche 1 bis 10, **dadurch gekennzeichnet, dass** von 1 bis 10, insbesondere von 1 bis 6, vorzugsweise 1 bis 4, zweite Elemente (2) vorhanden sind, beispielsweise in der Form einer Welle oder einer Bohrung.

12. Achse oder Rollkörper nach einem der Ansprüche 1 bis 11, **dadurch gekennzeichnet, dass** von 1 bis 3 Antriebselemente (3) vorhanden sind, insbesondere in der Form von Zahnrädern, Zahnriemenscheiben, Keilriemenscheiben, Klauenkupplungen, und wobei diese Antriebselemente (3) bei endständiger Plazierung auch einen mehrkantigen, wie beispielsweise einen vier- oder sechskantigen, Querschnitt haben können.

13. Achse oder Rollkörper nach einem der Ansprüche 1 bis 12, **dadurch gekennzeichnet, dass** sie/er die jeweils gestellten Anforderungen bezüglich Geradheit, Rundheit, Zylindrizität, Koaxialität und Rundlauf erfüllt.

14. Verfahren zur Herstellung der Achse oder des Rollkörpers nach einem der Ansprüche 1 bis 13, **dadurch gekennzeichnet, dass** man
- in einem ersten Schritt in einem Spritzgusswerkzeug mittels Spritzgussverfahren den Grundkörper mit der gewünschten Anzahl, Form und Dimensionen der Elemente (1, 2, 3, 4, 5, 6, 7) auf der Basis des ersten thermoplastischen Materials herstellt, und
- in einem zweiten Schritt in einem Spritzgusswerkzeug mittels Spritzgussverfahren die jeweils gewünschte Anzahl von ersten Elementen (1) auf dem so erhaltenen Grundkörper vollständig oder teilweise mit einem zweiten thermoplastischen Material umgibt, wobei zwischen den beiden genannten thermoplastischen Materialien ein adhäsiver oder kohäsiver oder mechanischer Verbund gebildet wird, und wobei dieser Verbund ohne die Zuhilfenahme von weiteren zusätzlichen Materialien oder äusseren Einwirkungen gebildet wird.

15. Verfahren nach Anspruch 14, **dadurch gekennzeichnet, dass** man in einem dritten Schritt in einem Spritzgusswerkzeug mittels Spritzgussverfahren die jeweils gewünschte Anzahl von ersten Elementen (1), welche im zweiten Schritt noch nicht vom zweiten thermoplastischen Material umgeben worden sind, und/oder die jeweils gewünschte Anzahl von äusseren Oberflächen der im zweiten Schritt mit dem zweiten thermoplastischen Material vollständig oder teilweise umgebenen ersten Elemente (1) und/oder die jeweils gewünschte Anzahl von zweiten Elementen (2) mit einem dritten thermoplastischen Material (10) vollständig oder teilweise umgibt, wobei zwischen den betreffenden thermoplastischen Materialien ein adhäsiver oder kohäsiver oder mechanischer Verbund gebildet wird, und wobei dieser Verbund ohne die Zuhilfenahme von weiteren zusätzlichen Materialien oder äusseren Einwirkungen gebildet wird.

16. Verfahren nach einem der Ansprüche 14 bis 15, **dadurch gekennzeichnet, dass** man den ersten Schritt und den zweiten Schritt, und gegebenenfalls auch den dritten Schritt, in einem Mehrkomponenten-Spritzgusswerkzeug im Mehrkomponenten-Spritzgussverfahren ausführt.

17. Verwendung der Achse oder des Rollkörpers nach einem der Ansprüche 1 bis 13
- zum Fördern und/oder Transportieren von Aufzeichnungsträgern in der Form eines Einzelblattes, eines Streifens oder einer Endlosrolle, beispielsweise Bild- und/oder Schriftträger, insbesondere auf der Basis von Kunststoffen, Metallen, Metall-Legierungen, Papieren, Karton, wie Banknoten, beschriftete oder bedruckte Papiere; und
- zum Fördern und/oder Transportieren von Gegenständen, wie Holz-, Kunststoff- oder Steinplatten, Behälter, wie Flaschen, Gläser, Kunststoffboxen, Geräten.

## Claims

1. Axis or roller body on the basis of at least one first thermoplastic material which is processable in an injection molding process, which
- has at least one first element (1) which has the function of a roller, and
- has at least one second element (2) which has the function of the support,
and possibly includes
- at least one driving element (3),
- at least one stabilizing element (4),
- at least one function and/or constructional element (5), such as cams, keyways, grooves, levers, pins, bolts, bore holes, dogs, and
- at least one third element (6), which contributes to the improving and simplification of the squeezing off during the injection process,
**characterized in that** the first element (1), the second element (2) and the occasionally present elements (3, 4, 5, 6) form a base body on the basis of at least one first thermoplastic material which is processable in an injection molding process,
whereby the axis or the roller body is made exclusively of thermoplastic materials processable in an injection molding process, and
whereby the first element (1) and the second element (2) are separate functional areas along the base body,
the respective desired number of said first elements (1) is completely or in part encased by at least one second thermoplastic material which is processable in an injection molding process, and
that the respective thermoplastic materials form together an adhesive or cohesive or mechanical bond attained by the injection molding process, and whereby this bond has been arrived at without the aid of additional materials or outer influences.

2. Axis or roller body according to claim 1, **characterized in that** the respective desired number of first elements (1), which are not encased by said second thermoplastic material, and/or the respective desired number of outer surfaces of the first elements (i) encased by the second thermoplastic material and/or the respective desired number of second elements (2) (is) are encased completely or in part by a third thermoplastic material.

3. Axis or roller body according to one of the claims 1 to 2, **characterized in that** the thermoplastic materials comprise the respectively desired qualities of stability, dimensional stability, wear, adhesion, hardness and friction reconciled with each other.

4. Axis or roller body according to one of the claims 1 to 3, **characterized in that** the first thermoplastic material is selected from the group consisting of
- technical polymers, for instance polyamides, PA, polycarbonates, PC, polybutyleneterephthalates, PBTP, polyethyleneterephthalates, PETP, polyoxymethylene, POM,
- heavy duty polymers, for instance liquid crystal - polymers, LCP, polyetherimide, PEI, polyethersulfone, PES, polyphenylensulfide, PPS,
whereby these materials are possibly modified by additives, for instance glass fibres, carbon fibres, agents for influencing the gliding properties and/or the burning behaviour, coloring agents, mineral materials.

5. Axis or roller body according to one of the claims 2 to 4, **characterized in that** the second and the third thermoplastic material both are each selected from the group consisting of
- thermoplastic elastomers on the basis of copolyesters, polyester-block-amides, thermoplastic polyurethanes, TPU, thermoplastic polyolefines, TPO, and styrene-block-copolymers, SEBS,
- technical polymers, for instance polyoxymethylene, POM, polyamide, PA, Polybutyleneterephthalate, PBTP, and
- standard polymers, for instance polypropylene, PP, polyethylene, PE, ethylene-vinylacetate-copolymers, EVA,
whereby these materials are possibly modified with additives, for instance agents for influencing the gliding properties and/or the burning behaviour, colouring agents, mineral materials.

6. Axis or roller body according to one of the claims 2 to 5, **characterized in that** in case of an adhesive or cohesive bond between first and second or between second and third or between first and third thermoplastic material the properties of the respective materials are reconciled with each other, especially the melting points and the belonging to a certain material class as well as the processing-technical parameters.

7. Axis or roller body according to one of the claims 1 to 6, **characterized in that** the first thermoplastic material is a polyarylamide, and that the second thermoplastic material is a styrene-block-copolymer.

8. Axis or roller body according to one of the claims 1 to 7, **characterized in that** from 1 to 30, specifically from 1 to 15, preferably from 1 to 8, first elements (1) are present.

9. Axis or roller body according to one of the claims 1 to 8, **characterized in that** the first element (1) has a cylinder shaped, conical, lamellar or an open or an at one side closed tube shaped structure.

10. Axis or roller body according to one of the claims 1 to 9, **characterized in that** the first element (1) comprises reinforcing ribs (7), specifically 2 to 20 symmetrically arranged reinforcing ribs (7).

11. Axis or roller body according to one of the claims 1 to 10, **characterized in that** from 1 to 10, specifically from 1 to 6, preferably 1 to 4, second elements (2) are present, for instance in the form of a shaft or a bore hole.

12. Axis or roller body according to one of the claims 1 to 11, **characterized in that** from 1 to 3 driving elements (3) are present, specifically in the form of gear wheels, toothed belt pulleys, V-belt put-leys, clutch coupling, and whereby these driving elements (3) can have in case of an arrangement at an end also a mullet edge, for instance a four or six edged cross sectional shape.

13. Axis or roller body according to one of the claims 1 to 12, **characterized in that** it fullfils the respective set demands regarding straightness, roundness, cylindricality, coaxiality and true running.

14. A method of producing the axis or the roller body according to one of the claims 1 to 13, **characterized in that**
- in a first step the base body with the desired number, shape and dimensions of the elements (1, 2, 3, 4, 5, 6, 7) is produced in an injection molding tool by means of an injection molding process on the basis of the first thermoplastic material, and
- in a second step the respective desired number of first elements (1) on the accordingly obtained base body is encased in an injection molding tool by means of an injection molding process completely or partly by a second thermoplastic material, whereby an adhesive or cohesive or mechanical bond is formed between the mentioned two thermoplastic materials, and whereby this bond is formed without the aid of further additional materials or outer influences.

15. The method according to claim 14, **characterized in that** in a third step the respective desired number of first elements (1) which have not yet been encased in the second step by the second thermoplastic material, and/or the respective desired number of outer surfaces of the first elements (1) which in the second step were encased completely or partly by the second thermoplastic material and/or the respective desired number of second elements (2) is encased completely or partly by a third thermoplastic material (10) in an injection molding tool by an injection molding process, whereby an adhesive or cohesive or mechanical bond is formed between the corresponding thermoplastic materials, and whereby this bond is formed without the aid of further additional materials or outer influences.

16. The method according to one of the claims 14 to 15, **characterized in that** the first step and the second step, and possibly also the third step are performed in a multiple component injection molding tool in a multi component injection molding process.

17. Use of the axis or of the roller body according to one of the claims 1 to 13
- for a conveying and/or transporting of recording mediums in the form of an individual sheet, a band or an endless roll, for instance picture and/or character carriers, specifically on the basis of plastic materials, metals, metal alloys, papers, cardboard, such as bank notes, inscribed or printed papers; and
- for a conveying and/or transporting of articles, such as wood, plastic material or stone slabs, containers, such as bottles, glasses, plastic material boxes, tools.

## Revendications

1. Arbre ou rouleau à base d'au moins un premier matériau thermoplastique transformable par un procédé de moulage par injection, qui comprend
- au moins un premier élément (1), qui a la fonction d'un rouleau, et
- au moins un deuxième élément (2), qui a la fonction d'un palier,
ainsi que, le cas échéant,
- au moins un élément d'entraînement (3),
- au moins un élément de stabilisation (4),
- au moins un élément fonctionnel et/ou un élément de construction (5), tels que cames, coins, rainures, levier, tourillons, goujons, trous de fixation, taquets, et
- au moins un troisième élément (6) qui contribue à l'amélioration et à la simplification de l'écrasement pendant le moulage par injection,
**caractérisé en ce que**
le premier élément (1), le deuxième élément (2) ainsi que les éléments (3, 4, 5, 6) le cas échéant présents forment un corps de base constitué d'au moins un premier matériau thermoplastique transformable par un procédé de moulage par injection,
l'arbre ou le rouleau étant exclusivement fabriqué dans des matériaux thermoplastiques transformables par un procédé de moulage par injection, et
le premier élément (1) et le deuxième élément (2) étant des zones fonctionnelles séparées le long du corps de base,
le nombre respectivement désiré des premiers éléments cités (1) étant entièrement ou partiellement entourés par au moins un deuxième matériau thermoplastique transformable par un procédé de moulage par injection, et
**en ce que** les matériaux thermoplastiques concernés forment entre eux une liaison adhésive ou cohésive ou mécanique obtenue par moulage par injection, et cette liaison étant obtenue sans faire appel à l'intervention d'autres matériaux supplémentaires ni d'interventions extérieures.

2. Arbre ou rouleau suivant la revendication 1, **caractérisé en ce que** le nombre respectivement désiré de premiers éléments (1) qui ne sont pas entourés par le deuxième matériau thermoplastique mentionné et/ou le nombre respectivement désiré de surfaces extérieures des premiers éléments (1) entourés par le deuxième matériau thermoplastique et/ou le nombre respectivement désiré de deuxièmes éléments (2) sont entourés complètement ou partiellement d'un troisième matériau thermoplastique.

3. Arbre ou rouleau suivant l'une des revendications 1 ou 2, **caractérisé en ce que** les matériaux thermoplastiques présentent les caractéristiques respectivement exigées et adaptées l'une à l'autre de solidité, de stabilité dimensionnelle, de résistance à l'usure, d'adhérence, de dureté et de frottement.

4. Arbre ou rouleau suivant l'une des revendications 1 à 3, **caractérisé en ce que** le premier matériau thermoplastique est sélectionné parmi le groupe constitué de
- polymères techniques, par exemple les polyamides, PA, les polycarbonates, PC, les polybutylènetéréphthalates, PBTP, les polyéthylènetéréphtalates, PETP, le polyoxyméthylène, POM,
- les polymères à hautes performances, par exemple les polymères de cristaux liquides, LCP, le polyétherimide, PEI, le polyéthersulfone, PES, le polysulfure de phénylène, PPS,
ces matériaux étant le cas échéant modifiés par des additifs, par exemple des fibres de verre, des fibres de carbone, des moyens influençant les caractéristiques de glissement et/ou le comportement au feu, des colorants, des substances minérales.

5. Arbre ou rouleau suivant l'une des revendications 2 à 4, **caractérisé en ce que** le deuxième et le troisième matériaux thermoplastiques sont sélectionnés parmi le groupe constitué de
- élastomères thermoplastiques à base de copolyesters, d'amides de polyéther bloc, de polyuréthannes thermoplastiques, TPU, de polyoléfines thermoplastiques, TPO, et de copolymères blocs de styrène, SEBS,
- polymères techniques, par exemple polyoxyméthylène, POM, le polyamide, PA, le polybutylènetéréphthalate, PBTP, et
- des polymères standard, par exemple le polypropylène, PP, le polyéthylène, PE, les copolymères d'éthylène et acétate de vinyle, EVA,
ces matériaux étant le cas échéant modifiés par des additifs, par exemple des moyens influençant les caractéristiques de glissement et/ou le comportement au feu, des colorants, des substances minérales.

6. Arbre ou rouleau suivant l'une des revendications 2 à 5, **caractérisé en ce que**, dans le cas d'une liaison adhésive ou cohésive entre le premier et le deuxième ou entre le deuxième et le troisième ou entre le premier et le troisième matériaux thermoplastiques, les caractéristiques des matériaux respectifs sont adaptées les unes aux autres, en particulier les points de fusion et l'appartenance à une catégorie de substances déterminée ainsi que les paramètres technologiques.

7. Arbre ou rouleau suivant l'une des revendications 1 à 6, **caractérisé en ce que** le premier matériau thermoplastique est un polyarylamide et **en ce que** le deuxième matériau thermoplastique est un copolymère bloc de styrène.

8. Arbre ou rouleau suivant l'une des revendications 1 à 7, **caractérisé en ce que** de 1 à 30, en particulier de 1 à 15, de préférence de 1 à 8, premiers éléments (1) sont présents.

9. Arbre ou rouleau suivant l'une des revendications 1 à 8, **caractérisé en ce que** le premier élément (1) a une structure cylindrique, conique, en forme de lamelles ou une structure tubulaire ouverte ou fermée d'un côté.

10. Arbre ou rouleau suivant l'une des revendications 1 à 9, **caractérisé en ce que** le premier élément (1) présente des nervures de renforcement (7), en particulier de 2 à 20 nervures de renforcement (7) disposées symétriquement.

11. Arbre ou rouleau suivant l'une des revendications 1 à 10, **caractérisé en ce que** de 1 à 10, en particulier de 1 à 6, de préférence de 1 à 4, deuxièmes éléments (2) sont présents, par exemple sous la forme d'un arbre ou d'un alésage.

12. Arbre ou rouleau suivant l'une des revendications 1 à 11, **caractérisé en ce que** de 1 à 3 éléments d'entraînement (3) sont présents, en particulier sous la forme de roues dentées, de poulies pour courroie crantée, de poulies pour courroie trapézoïdale, d'accouplements à griffes, et ces éléments d'entraînement (3) pouvant avoir en cas de placement d'extrémité également une section polygonale, telle que par exemple carrée ou hexagonale.

13. Arbre ou rouleau suivant l'une des revendications 1 à 12, **caractérisé en ce qu'**il remplit les exigences respectives en matière de linéarité, rondeur, cylindricité, coaxialité et faux-rond.

14. Procédé de fabrication de l'arbre ou du rouleau suivant l'une des revendications 1 à 13, **caractérisée en ce que**
- on fabrique le corps de base au cours d'une première étape dans un moule pour injection par moulage par injection avec le nombre, la forme et les dimensions désirés des éléments (1, 2, 3, 4, 5, 6, 7) à base du premier matériau thermoplastique, et
- au cours d'une deuxième étape on entoure par moulage par injection dans un moule pour injection entièrement ou partiellement d'un deuxième matériau thermoplastique le nombre respectivement désiré des premiers éléments (1) sur le corps de base ainsi obtenu, une liaison adhésive ou cohésive ou mécanique étant formée entre les deux matériaux thermoplastiques cités, et cette liaison étant obtenue sans faire appel à l'intervention d'autres matériaux supplémentaires ni d'interventions extérieures.

15. Procédé suivant la revendication 14, **caractérisé en ce que**, dans une troisième étape, on entoure par moulage par injection dans un moule pour injection complètement ou partiellement d'un troisième matériau thermoplastique (10) le nombre respectivement désiré de premiers éléments (1) qui n'ont pas encore été entourés par le deuxième matériau thermoplastique lors de la deuxième étape et/ou le nombre respectivement désiré de surfaces extérieures des premiers éléments (1) entourés complètement ou partiellement par le deuxième matériau thermoplastique lors de la deuxième étape et/ou le nombre respectivement désiré de deuxièmes éléments (2), une liaison adhésive ou cohésive ou mécanique étant formée entre les matériaux thermoplastiques concernés, et cette liaison étant obtenue sans faire appel à l'intervention d'autres matériaux supplémentaires ni d'interventions extérieures.

16. Procédé suivant l'une des revendications 14 ou 15, **caractérisé en ce qu'**on réalise la première étape et la deuxième étape, et le cas échéant également la troisième étape, dans un moule pour injection de plusieurs composants par un procédé de moulage par injection à plusieurs composants.

17. Utilisation de l'arbre ou du rouleau suivant l'une des revendications 1 à 13
- pour convoyer et/ou transporter des supports d'enregistrements sous la forme d'une feuille individuelle, d'une bande ou d'un rouleau continu, par exemple des supports d'images et/ou d'écriture, en particulier à base de matières plastiques, métaux, alliages métalliques, papiers, cartons, tels que des billets de banque, des papiers manuscrits ou imprimés; et
- pour convoyer et/ou transporter des objets, tels que des plaques de bois, de matière plastique ou de pierre, des récipients, tels que des bouteilles, des verres, des boîtes en matière plastique, des appareils.
